# EUROPÄISCHE PATENTSCHRIFT

(11) **EP 3 057 855 B1**
(45) Veröffentlichungstag und Bekanntmachung des Hinweises auf die Patenterteilung: **27.12.2017**
(21) Anmeldenummer: 14790021.1
(22) Anmeldetag: 09.10.2014
(51) Int. Cl.: B62D 33/077, B62D 53/08, B62D 55/08, B62D 55/06

(54) **TRANSPORTSYSTEM**
TRANSPORT SYSTEM
SYSTÈME DE TRANSPORT

(30) Priorität: 17.10.2013 DE 102013111485
(43) Veröffentlichungstag der Anmeldung: 24.08.2016
(73) Patentinhaber: Meister, Claudia, 64807 Dieburg (DE)
(72) Erfinder: Meister, Jochen, verstorben (DE)
(74) Vertreter: Katscher Habermann Patentanwälte
(86) Internationale Anmeldenummer: PCT/EP2014/071704
(87) Internationale Veröffentlichungsnummer: WO 2015/055514

(56) Entgegenhaltungen:
- EP-A1- 1 686 046
- EP-A2- 2 052 953
- DE-A1- 1 907 050
- DE-A1- 3 609 374
- DE-A1- 4 217 249
- DE-A1-102007 004 619
- DE-U1-202006 008 447
- FR-A1- 2 705 630

## Beschreibung

Die Erfindung betrifft ein Transportsystem mit einer Transportraupe und mit einer lösbar mit der Transportraupe verbundenen Transporteinheit, wobei die Transportraupe eine Auflagervorrichtung aufweist, wobei ein Gegenlager der Transporteinheit mit der Auflagervorrichtung in Eingriff steht und wobei die Auflagervorrichtung so ausgestaltet ist, dass unterschiedlich ausgestaltete Gegenlager mit der Auflagervorrichtung in Eingriff gebracht werden können. Die DE 36 09 374 A1 offenbart ein solches Transportsystem. Solche Transportsysteme werden üblicherweise dazu verwendet, Lasten in unwegsamem Gelände zu transportieren. Zu diesem Zweck sind Transportraupen besonders gut geeignet, da die Transportraupen Kettenlaufwerke aufweisen, die eine vergleichsweise große Aufstandsfläche bieten und daher eine vergleichsweise große Traktion auch in unbefestigten beziehungsweise unwegsamen Gelände aufweisen. Bei den bekannten Transportsystemen werden speziell für den jeweiligen Einsatzzweck konzipierte und an eine zu transportierende Transporteinheit bzw. Last angepasste Transportraupen verwendet. Diese Spezialtransportraupen sind dabei jeweils so an die zu transportierende Transporteinheit angepasst, dass ausschließlich Transporteinheiten lediglich eines Typs mit Hilfe einer Spezialtransportraupe transportiert werden können. Dies hat zum einen zur Folge, dass die Herstellung des Transportsystems aufwendig und kostenintensiv ist, da die Stückzahlen der an die zu transportierende Transporteinheit angepassten Spezialtransportraupen äußerst gering sind und zum anderen zur Folge, dass ein flexibler Einsatz der Spezialtransportraupen in unterschiedlichen Transportsystemen nur eingeschränkt möglich ist.

Um dies zu vermeiden wird in der Druckschrift EP 2 052 953 A2 ein Transportsystem mit einer Transportraupe beschrieben, wobei ein Kupplungsflansch einer Sattelkupplung der Transportraupe ausgetauscht werden kann, um verschiedene Sattelaufleger mit unterschiedlich ausgestalteten Gegenlagern mit der Transportraupe transportieren zu können.

Als Aufgabe der Erfindung wird es angesehen, die aus dem Stand der Technik bekannten Transportsysteme weiter zu verbessern und ein Transportsystem bereitzustellen, das möglichst flexibel einsetzbar ist und mit dem einfach unterschiedliche Lasten transportiert werden können.

Diese Aufgabe wird erfindungsgemäß dadurch gelöst, dass die Auflagervorrichtung mehrere Auflager aufweist. Diese Auflager sind zweckmäßigerweise so an der Transportraupe angeordnet, dass mit diesen Auflagern entsprechende Gegenlager unterschiedlicher Lasten in Eingriff gebracht werden können.

Vorteilhafterweise ist vorgesehen, dass es sich bei der Transporteinheit um einen Wechselrahmen handelt, wobei der Wechselrahmen zur Aufnahme eines Transportguts geeignet ist. Mit Hilfe eines solchen auf der Transportraupe angeordneten Wechselrahmens kann das Transportgut unmittelbar auf der Transportraupe angeordnet werden und mit Hilfe der Transportraupe transportiert werden. Bei dem auf dem Wechselrahmen zu transportierenden Transportgut kann es sich beispielsweise um Rohre, Masten, Rotorblätter für Windkraftanlagen oder dergleichen handeln.

Um auch in einem Sattelauflieger mit Hilfe einer radgebundenen Sattelzugmaschine angeliefertes Transportgut ohne aufwendiges Umladen mit Hilfe des Transportsystems transportieren zu können ist erfindungsgemäß vorgesehen, dass es sich bei der Transporteinheit um einen Sattelauflieger handelt. Auf diese Weise können mit dem erfindungsgemäßen Transportsystem auch herkömmliche und für den Straßeneinsatz ausgelegte Sattelaufleger in unwegsamem Gelände verwendet werden.

Es ist aber auch möglich und erfindungsgemäß vorgesehen, dass es sich bei der Transporteinheit um einen Kran handelt. Der Kran ist vorteilhafterweise auf der Transportraupe angeordnet und kann mit Hilfe der Transportraupe auch zu schwierig zu erreichenden Baustellen einfach transportiert werden.

Vorteilhafterweise ist erfindungsgemäß vorgesehen, dass die Auflager unabhängig voneinander in Richtung einer Hochachse der Transportraupe höhenverstellbar ausgestaltet sind. Auf diese Weise kann beispielsweise eine Neigung der auf den Auflagern angeordneten Transporteinheit einfach verändert und an eine gewünschte Neigung angepasst werden. Beispielsweise ist es auf diese Weise zudem möglich, die Neigung der Transporteinheit an eine Fahrbahnneigung derart anzupassen, dass ein auf der Transporteinheit angeordnetes Transportgut unabhängig von einer Fahrbahnneigung der jeweils von der Transportraupe befahrenen Fahrbahn im Wesentlichen horizontal ausgerichtet und auf der Transporteinheit gelagert ist.

Zu diesem Zweck sind die Gegenlager der verwendeten Transporteinheit vorteilhafterweise schwimmend auf den Auflagern gelagert angeordnet. Auf diese Weise kann eine Veränderung eines Auflagerabstands zwischen zwei an Gegenlagern anliegenden Auflagerpunkten zweier Auflager der Auflagervorrichtung durch die schwimmende Lagerung ausgeglichen werden. Eine solche Änderung des Auflagerabstands der Auflagerpunkte wird durch eine Veränderung der Höhe einzelner Auflager hervorgerufen. Den geringsten Auflagerabstand weisen die Auflager auf, wenn sämtliche Auflager in die gleiche Position verlagert sind. Der Auflagerabstand vergrößert sich, wenn die Auflager in unterschiedliche Höhen verlagert sind. Um diese Abstandsänderung einfach ausgleichen zu können, ist die erfindungsgemäße schwimmende Lagerung besonders vorteilhaft. Es sind aber auch andere Lösungen zum Ausgleich der Abstandsänderung möglich und erfindungsgemäß vorgesehen. Zudem ist es auch möglich und vorteilhafterweise vorgesehen, die Abstandsänderung durch eine Änderung einer Neigung der Auflager auszugleichen.

Um auch Sattelaufleger einfach mit der Auflagervorrichtung lösbar verbinden zu können ist erfindungsgemäß vorgesehen, dass die Auflagervorrichtung eine Sattelkupplung aufweist. Die Sattelkupplung ist vorteilhafterweise zur Aufnahme unterschiedlicher und bei herkömmlichen Sattelauflegern verwendeten Gegenlagern bzw. Kupplungssystemen angepasst, so dass mit Hilfe der Sattelkupplung eine Vielzahl verschiedener Gegenlagertypen in Eingriff gebracht und mit Hilfe der Transportraupe transportiert werden können.

Um die Sattelkupplung einfach beispielsweise aus einem für den Wechselrahmen benötigten Bereich heraus verlagern zu können ist erfindungsgemäß vorgesehen, dass die Sattelkupplung in Richtung der Hochachse der Transportraupe höhenverstellbar ausgestaltet ist. Auf diese Weise kann die Sattelkupplung einfach bei Bedarf aus einer Lagerposition in eine Transportposition verlagert werden, wenn mit Hilfe der Transportraupe ein Sattelaufleger transportiert werden soll. Dabei ist die Sattelkupplung in der Lagerposition vorteilhafterweise in Richtung des Erdbodens verlagert, so dass ein oberer Bereich der Transportraupe zur Aufnahme beispielsweise eines Wechselrahmens und unmittelbar auf dem Wechselrahmen angeordneter Transportgüter frei ist. Auf diese Weise wird auch eine Beschädigung der Sattelkupplung, zum Beispiel bei dem Beladen eines Wechselrahmens vermieden.

Um unterschiedlich ausgestaltete Sattelaufleger mit dem Transportsystem kombinieren zu können ist erfindungsgemäß vorgesehen, dass die Sattelkupplung in Richtung einer Längsachse der Transportraupe längsverstellbar ausgestaltet ist. Auf diese Weise kann die Position der Sattelkupplung an eine Position einer Kupplungsvorrichtung eines Sattelaufliegers angepasst werden. Es ist aber auch möglich, dass beispielsweise ein Kran sowohl mit Auflagern der Auflagervorrichtung als auch mit der Sattelkupplung in Eingriff steht, um eine besonders große Stabilität zu erreichen. Hierfür ist es auch von Vorteil die Position der Sattelkupplung sowohl in einer Länge als auch in einer Höher der Transportraupe anpassen zu können.

Um zu vermeiden, dass die Transportraupe von einem mit der Transportraupe verbundenen Sattelauflieger einseitig angehoben wird, wenn eine Fahrbahnneigung eines Fahrbahnbereichs auf dem sich die Transportraupe befindet von einer Fahrbahnneigung eines Fahrbahnbereichs unterscheidet, auf dem sich der Sattelaufleger befindet ist erfindungsgemäß vorgesehen, dass die Sattelkupplung frei schwenkbar gelagert an der Transportraupe angeordnet ist.

Um die Transportraupe einfach an die jeweils zu transportierende Transporteinheit anpassen zu können ist erfindungsgemäß vorgesehen, dass die Auflagervorrichtung in Richtung der Hochachse der Transportraupe höhenverstellbar ausgestaltet ist. Auf diese Weise kann die gesamte Auflagervorrichtung beispielsweise für den Transport der Transportraupe an einen neuen Einsatzort in einen z.B. von einem Gehäuse der Transportraupe umgebenen Bereich der Transportraupe verlagert werden, sodass diese die Auflagervorrichtung in der Lagerposition vor Beschädigungen geschützt ist. Zudem ist es möglich, einen für den Transport einer bestimmten Transporteinheit nicht benötigten Teil der Auflagervorrichtung einfach aus einem für die Ankupplung der Transporteinheit benötigten Bereich in eine Lagerposition zu verlagern.

Zur einfachen Verstellung der Auflagervorrichtung, der Auflager und/oder der Sattelkupplung ist erfindungsgemäß vorgesehen, dass die Transportraupe eine hydraulische Hubeinrichtung zur Höhenverstellung und/oder Längsverschiebung der Auflagervorrichtung aufweist. Mit Hilfe der hydraulischen Hubeinrichtung können beispielsweise die Auflager in der Höhe verstellt werden und die Sattelkupplung sowohl in der Höhe als auch längs verlagert werden.

Weitere vorteilhafte Ausgestaltungen des erfindungsgemäßen Transportsystems werden anhand von in der Zeichnung dargestellten Ausführungsbeispielen näher erläutert.

Es zeigt:
Fig. 1a ein schematisch dargestelltes Transportsystem mit einer Transportraupe und mit einem auf der Transportraupe angeordneten Wechselrahmen, wobei auf dem Wechselrahmen ein Rohr angeordnet ist,
Fig. 1b eine schematisch dargestellte Ansicht eines Transportsystems mit einem auf einem Wechselrahmen angeordneten Ladekran,
Fig. 1c ein schematisch dargestelltes Transportsystem mit einem auf einer Transportraupe angeordneten Teleskopkran,
Fig. 1d eine schematisch dargestellte Ansicht eines Transportsystems mit einem Sattelaufleger,
Fig. 2 eine schematisch dargestellte Draufsicht auf ein Transportsystem mit einer Transportraupe und einem auf der Transportraupe angeordneten Wechselrahmen,
Fig. 3a eine schematisch dargestellte Schnittansicht entlang der in Fig. 2 dargestellten Schnittlinie III-III,
Fig. 3b die in Fig. 3a schematisch dargestellte Schnittansicht, wobei Gegenlager des Wechselrahmens schwimmend auf Auflagern der Auflagervorrichtung gelagert sind,
Fig. 3c die in Fig. 3b schematisch dargestellte Schnittansicht, wobei die Auflager höhenverstellt sind,
Fig. 4a eine schematisch dargestellte Schnittansicht entlang der in Fig. 2 dargestellten Schnittlinie IV-IV,
Fig. 4b die in Fig. 4a schematisch dargestellte Schnittansicht, wobei der Wechselrahmen abgenommen wurde.

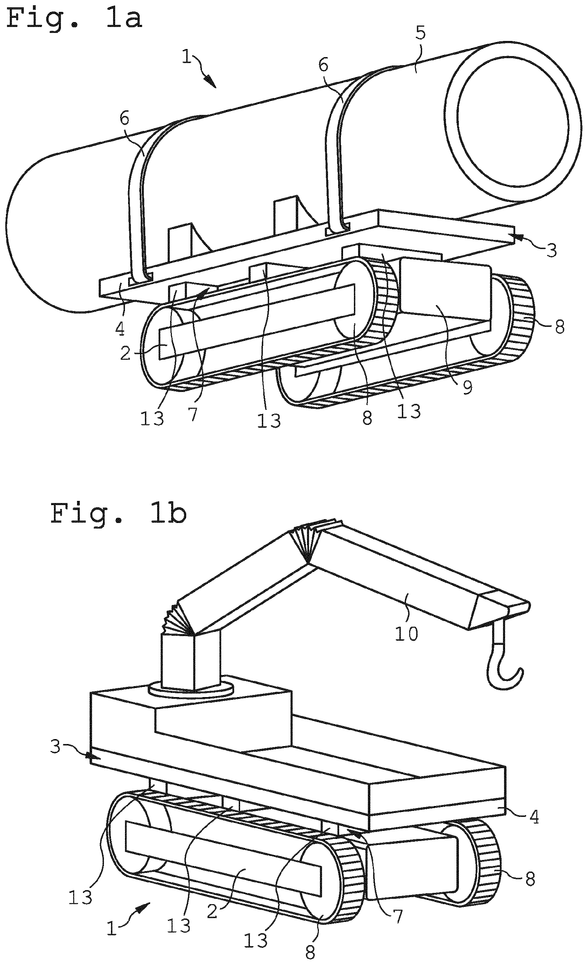

Fig. 1a bis 1b zeigen jeweils schematische Darstellungen eines Transportsystems 1 mit einer Transportraupe 2 und unterschiedlichen Transporteinheiten 3.

In Fig. 1a ist ein Transportsystem 1 mit einem lösbar mit der Transportraupe 2 verbundenen Wechselrahmen 4 schematisch dargestellt. Auf dem Wechselrahmen 3 ist ein Rohr 5 mit Hilfe von Gurten 6 festgelegt.

Die Transportraupe 2 weist eine Auflagervorrichtung 7 mit mehreren Auflagern 13 auf, die mit nicht dargestellten Gegenlagern des Wechselrahmens 4 in Eingriff stehen. Zudem weist die Transportraupe 2 zwei parallel zueinander angeordnete Kettenlaufwerke 8 und eine Antriebseinheit 9 auf, die die erforderliche Antriebsenergie bereitstellt und auf die Kettenlaufwerke 8 überträgt.

Fig. 1b zeigt schematisch das in Fig. 1a dargestellte Transportsystem 1, wobei auf dem Wechselrahmen 4 ein Ladekran 10 angeordnet ist.

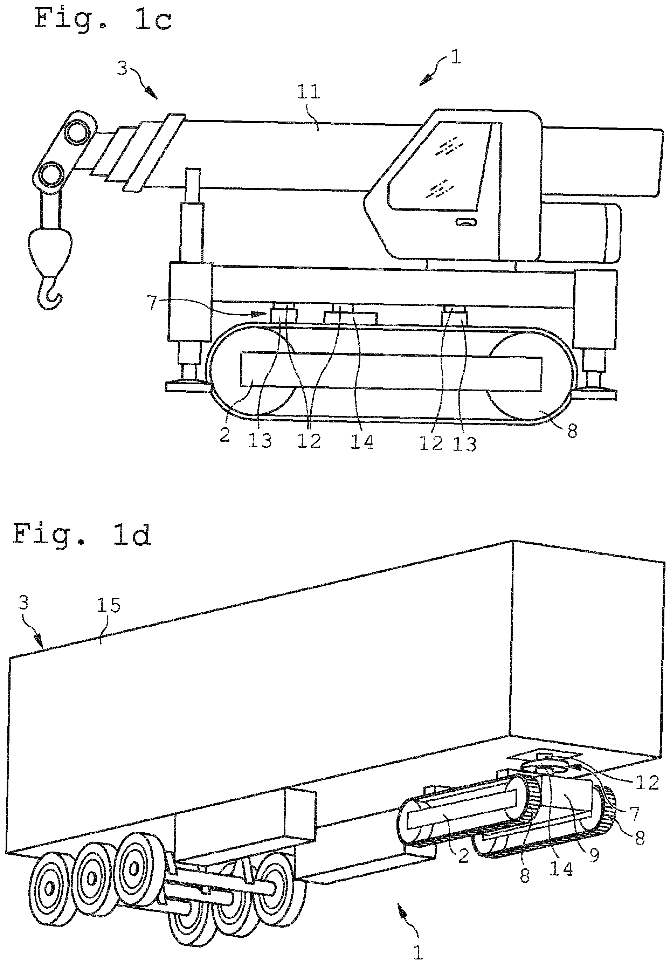

Fig. 1c zeigt ein Transportsystem 1 mit einem auf einer Transportraupe 2 angeordneten Teleskopkran 11. Gegenlager 12 des Teleskopkrans 11 stehen sowohl mit Auflagern 13 der Auflagervorrichtung 7 als auch mit einer Sattelkupplung 14 der Auflagervorrichtung 7 in Eingriff. Die Sattelkupplung 14 und die Auflager 13 sind höhenverstellbar ausgestaltet und in der Darstellung jeweils in die Transportposition verlagert, in der Gegenlager 12 einer Transporteinheit 3 mit der Sattelkupplung 14 und den Auflagern 13 in Eingriff gebracht werden können.

Fig. 1d zeigt eine schematisch dargestellte Ansicht auf ein Transportsystem 1 mit einem Sattelauflieger 15. Ein Gegenlager 12 des Sattelaufliegers 15 steht mit der Sattelkupplung 14 der Auflagervorrichtung 7 der Transportraupe 2 in Eingriff. Die Sattelkupplung 14 ist in der Transportposition. Die Auflager 13 sind in dieser Darstellung in die Lagerposition verlagert und daher nicht sichtbar dargestellt.

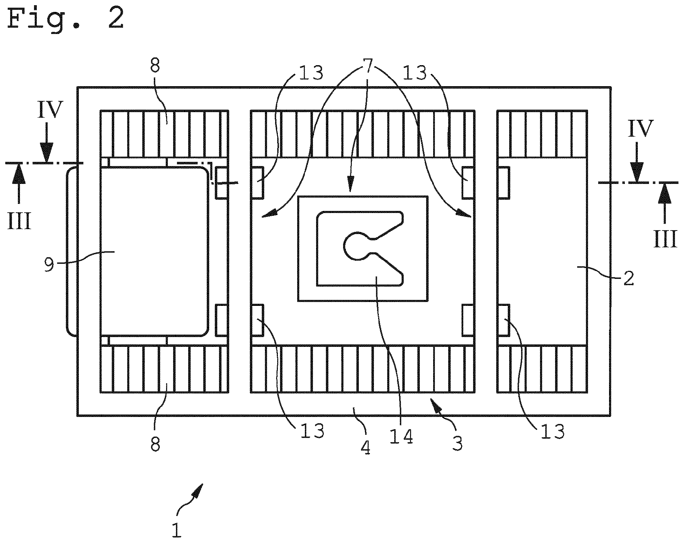

Fig. 2 zeigt eine schematisch dargestellte Draufsicht auf ein Transportsystem 1 mit einer Transportraupe 2 und mit einem auf der Transportraupe 2 lösbar angeordneten Wechselrahmen 4. Die Transportraupe 2 weist eine Auflagervorrichtung 7 auf, wobei die Auflagervorrichtung 7 wiederum vier Auflager 13 und eine Sattelkupplung 14 aufweist. Der Wechselrahmen 4 steht über nicht dargestellte Gegenlager des Wechselrahmens 4 mit den Auflagern 13 in Eingriff.

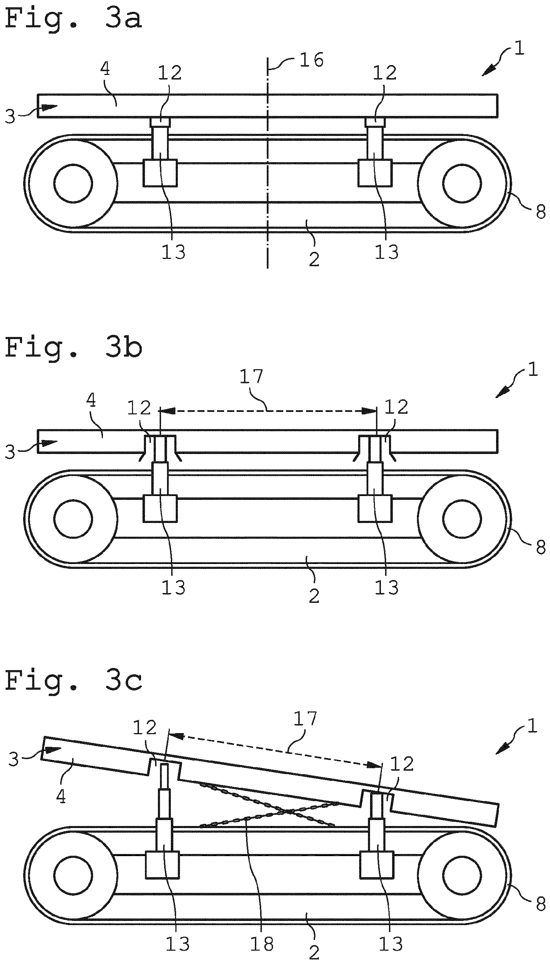

Fig. 3a zeigt eine schematisch dargestellte Schnittansicht eines Transportsystems 1 längs der in Fig. 2 dargestellten Schnittlinie III-III, wobei auf einer Transportraupe 2 ein Wechselrahmen 4 angeordnet ist. Der Wechselrahmen 4 ist über Gegenlager 12 starr mit den Auflagern 13 verbunden. Die Auflager 13 sind bezüglich einer Hochachse 16 der Transportraupe 2 höhenverstellbar ausgestaltet.

Fig. 3b zeigt eine vorteilhafte Weiterentwicklung des in Fig. 3a dargestellte Transportsystem 1, wobei Gegenlager 12 des Wechselrahmens 4 schwimmend auf den Auflagern 13 der Transportraupe 2 gelagert angeordnet sind. Auf diese Weise kann die Höhe der Auflager 13 unabhängig voneinander verstellt werden, da eine Veränderung eines Auflagerabstands 17 zwischen zwei an Gegenlagern 12 anliegenden Auflagerpunkten zweier Auflager 13 durch die schwimmende Lagerung ausgeglichen werden kann.

Fig. 3c zeigt eine schematische Darstellung des in Fig. 3b abgebildeten Transportsystems 1, wobei die Auflager 13 in unterschiedliche Höhen verlagert sind, sodass der Wechselrahmen 4 bezüglich der Transportraupe 2 geneigt ist. Der Auflagerabstand 17 hat sich im Vergleich zu der in der Figur 3b dargestellten Lager der Auflager 13 vergrößert. Diese Vergrößerung des Auflagerabstands 17 ist durch die schwimmende Lagerung der Gegenlager 12 des Wechselrahmens auf den Auflagern 13 der Auflagervorrichtung 7 ausgeglichen worden.

Um den Wechselrahmen 4 zusätzlich gegen ein Verrutschen zu sichern ist der Wechselrahmen 4 mit Ketten 18 verspannt, wobei die Ketten 18 an der Transportraupe 2 festgelegt sind.

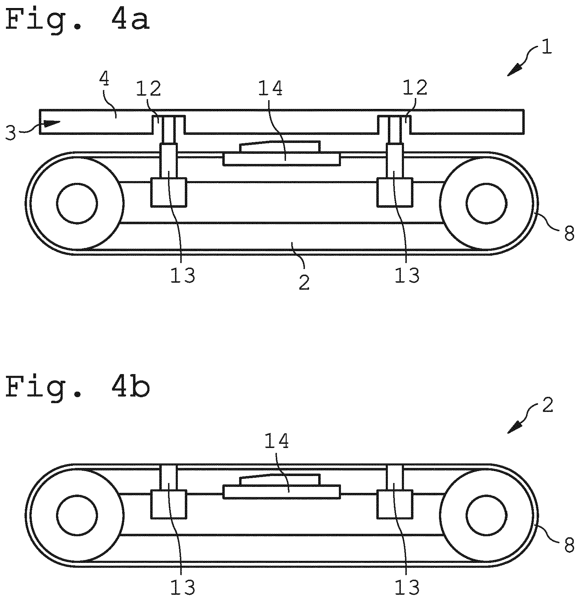

Fig. 4a zeigt eine schematisch dargestellte Schnittansicht eines Transportsystems 1 längs der in Fig. 2 abgebildeten Schnittlinie IV-IV. Gegenlager 12 eines Wechselrahmens 4 sind schwimmend auf Auflagern 13 einer Transportraupe 2 gelagert angeordnet. Eine Sattelkupplung 14 ist in eine Transportposition verlagert, so dass auf dem Wechselrahmen 4 beispielsweise ein Kran angeordnet werden kann, der zusätzlich mit der Sattelkupplung 14 in Eingriff bringbar ist.

Fig. 4b zeigt die in Fig. 4a schematisch dargestellte Transportraupe 2. Auflager 13 und eine Sattelkupplung 14 einer Auflagervorrichtung 7 sind in eine Lagerposition verlagert. Die gesamte Auflagervorrichtung 7 der Transportraupe 2 ist höhenverstellbar ausgestaltet. In der Lagerposition ist die Auflagervorrichtung 7 vor Verschmutzung, Witterungseinflüssen und beispielsweise durch einen Transport der Transportraupe 2 hervorgerufene Beschädigungen geschützt.

## Patentansprüche

1. Transportsystem (1) mit einer Transportraupe (2) und mit einer lösbar mit der Transportraupe (2) verbundenen Transporteinheit (3), wobei die Transportraupe (2) eine Auflagervorrichtung (7) aufweist, wobei ein Gegenlager (12) der Transporteinheit (3) mit der Auflagervorrichtung (7) in Eingriff steht und wobei die Auflagervorrichtung (7) so ausgestaltet ist, dass unterschiedlich ausgestaltete Gegenlager (12) mit der Auflagervorrichtung (7) in Eingriff gebracht werden können, **dadurch gekennzeichnet, dass** die Auflagervorrichtung (7) mehrere Auflager (13) aufweist.

2. Transportsystem (1) gemäß Anspruch 1, **dadurch gekennzeichnet, dass** es sich bei der Transporteinheit (3) um einen Wechselrahmen (4) handelt, wobei der Wechselrahmen (4) zur Aufnahme eines Transportguts geeignet ist.

3. Transportsystem (1) gemäß Anspruch 1, **dadurch gekennzeichnet, dass** es sich bei der Transporteinheit (3) um einen Sattelaufleger (15) handelt.

4. Transportsystem (1) gemäß Anspruch 1, **dadurch gekennzeichnet, dass** es sich bei der Transporteinheit (3) um einen Kran handelt.

5. Transportsystem (1) gemäß einem der voranstehenden Ansprüche, **dadurch gekennzeichnet, dass** die Auflager (13) unabhängig voneinander in Richtung einer Hochachse (16) der Transportraupe (2) höhenverstellbar ausgestaltet sind.

6. Transportsystem (1) gemäß einem der voranstehenden Ansprüche, **dadurch gekennzeichnet, dass** die Auflagervorrichtung (7) eine Sattelkupplung (14) aufweist.

7. Transportsystem (1) gemäß Anspruch 6, **dadurch gekennzeichnet, dass** die Sattelkupplung (14) in Richtung der Hochachse (16) höhenverstellbar ausgestaltet ist.

8. Transportsystem (1) gemäß Anspruch 6 oder Anspruch 7, **dadurch gekennzeichnet, dass** die Sattelkupplung (14) in Richtung einer Längsachse der Transportraupe (2) längsverschiebbar ausgestaltet ist.

9. Transportsystem (1) gemäß einem der Ansprüche 6 bis 8, **dadurch gekennzeichnet, dass** die Sattelkupplung (14) frei schwenkbar gelagert an der Transportraupe (2) angeordnet ist.

10. Transportsystem (1) gemäß einem der voranstehenden Ansprüche, **dadurch gekennzeichnet, dass** die Auflagervorrichtung (4) in Richtung der Hochachse (16) der Transportraupe (2) höhenverstellbar ausgestaltet ist.

11. Transportsystem (1) gemäß einem der voranstehenden Ansprüche, **dadurch gekennzeichnet, dass** die Transportraupe (2) eine hydraulische Hubeinrichtung zur Höhenverstellung und/oder Längsverschiebung der Auflagervorrichtung (7) aufweist.

## Claims

1. Transport system (1) with a crawler track (2) and a transport unit (3) detachably connected to the crawler track (2), wherein the crawler track (2) comprises a support device (7), wherein a counter-bearing (12) of the transport unit (3) engages with the support device (7), and wherein the support device (7) is configured in such a way that counter-bearings configured (12) differently are engageable with the support device (7), **characterized in that** the support device comprises multiple supports (13).

2. Transport system (1) according to claim 1, **characterized in that** the transport unit (3) is an exchangeable frame (4), wherein the exchangeable frame (4) is suitable for the receiving of a material to be transported.

3. Transport system (1) according to claim 1, **characterized in that** the transport unit (3) is a semi-trailer (15).

4. Transport system (1) according to claim 1, **characterized in that** the transport unit (3) is a crane.

5. Transport system (1) according to one of the preceding claims, **characterized in that** the supports (13) are configured to be height-adjustable independently from one another in the direction of a height axis (16) of the crawler track (2).

6. Transport system (1) according to one of the preceding claims, **characterized in that** the support device (7) includes a semitrailer coupling (14).

7. Transport system (1) according to claim 6, **characterized in that** the semitrailer coupling (14) is configured to be height-adjustable in the direction of the height axis (16).

8. Transport system (1) according to claim 6 or claim 7, **characterized in that** the semitrailer coupling (14) is configured to be longitudinally displaceable in the direction of a longitudinal axis of the crawler track (2).

9. Transport system (1) according to one of claims 6 to 8, **characterized in that** the semitrailer coupling (14) is arranged on the crawler track in a freely-pivotable manner.

10. Transport system (1) according to one of the preceding claims, **characterized in that** the support device (4) is configured to be height-adjustable in the direction of the height axis (16) of the crawler track (2).

11. Transport system (1) according to one of the preceding claims, **characterized in that** the crawler track (2) comprises a hydraulic lifting device for height adjustment and/or longitudinal displacement of the support device (7).

## Revendications

1. Système de transport (1) comprenant une chenille de transport (2) et une unité de transport (3) reliée de manière amovible à la chenille de transport (2), la chenille de transport (2) présentant un dispositif de support (7), un palier-support (12) de l'unité de transport (3) étant en prise avec le dispositif de support (7), et le dispositif de support (7) étant conçu de manière à ce que des paliers-supports (12) conçus différemment puissent être mis en prise avec le dispositif de support (7), **caractérisé en ce que** le dispositif de support (7) présente plusieurs supports (13).

2. Système de transport (1) selon la revendication 1, **caractérisé en ce que** l'unité de transport (3) est un cadre interchangeable (4), le cadre interchangeable (4) étant apte à loger un produit à transporter.

3. Système de transport (1) selon la revendication 1, **caractérisé en ce que** l'unité de transport (3) est une semi-remorque (15).

4. Système de transport (1) selon la revendication 1, **caractérisé en ce que** l'unité de transport (3) est une grue.

5. Système de transport (1) selon l'une quelconque des revendications précédentes, **caractérisé en ce que** les supports (13) sont conçus de manière réglable en hauteur indépendamment les uns des autres en direction d'un axe vertical (16) de la chenille de transport (2).

6. Système de transport (1) selon l'une quelconque des revendications précédentes, **caractérisé en ce que** le dispositif de support (7) présente une sellette d'attelage (14).

7. Système de transport (1) selon la revendication 6, **caractérisé en ce que** la sellette d'attelage (14) est conçue de manière réglable en hauteur en direction de l'axe vertical (16).

8. Système de transport (1) selon la revendication 6 ou la revendication 7, **caractérisé en ce que** la sellette d'attelage (14) est conçue de manière déplaçable en longueur en direction d'un axe longitudinal de la chenille de transport (2).

9. Système de transport (1) selon l'une quelconque des revendications 6 à 8, **caractérisé en ce que** la sellette d'attelage (14) est disposée sur la chenille de transport (2) de manière librement pivotante.

10. Système de transport (1) selon l'une quelconque des revendications précédentes, **caractérisé en ce que** le dispositif de support (7) est conçu de manière réglable en hauteur en direction de l'axe vertical (16) de la chenille de transport (2).

11. Système de transport (1) selon l'une quelconque des revendications précédentes, **caractérisé en ce que** la chenille de transport (2) présente un dispositif de levage hydraulique pour le réglage en hauteur et/ou le déplacement longitudinal du dispositif de support (7).
